(19) **Europäisches Patentamt**

**European Patent Office**

**Office européen des brevets**

(11) **EP 1 325 542 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(51) Int Cl.:
*H02J 7/14* *(2006.01)*    *H02J 7/16* *(2006.01)*
*H02J 7/00* *(2006.01)*

(21) Anmeldenummer: **01962982.3**

(22) Anmeldetag: **29.08.2001**

(86) Internationale Anmeldenummer:
**PCT/EP2001/009947**

(87) Internationale Veröffentlichungsnummer:
**WO 2002/025794 (28.03.2002 Gazette 2002/12)**

(54) **VERFAHREN ZUR REGELUNG DER GENERATORSPANNUNG IN EINEM KRAFTFAHRZEUG**

METHOD FOR REGULATING THE GENERATOR VOLTAGE IN A MOTOR VEHICLE

PROCEDE DE REGULATION DE LA TENSION D'UN GENERATEUR DANS UNE AUTOMOBILE

(84) Benannte Vertragsstaaten:
**DE FR GB IT**

(30) Priorität: **20.09.2000 DE 10046631**

(43) Veröffentlichungstag der Anmeldung:
**09.07.2003 Patentblatt 2003/28**

(73) Patentinhaber: **DaimlerChrysler AG**
**70567 Stuttgart (DE)**

(72) Erfinder:
• **BLÜMEL, Roland**
**70599 Stuttgart-Plieningen (DE)**
• **DINSER, Wolfgang**
**73776 Altbach (DE)**
• **KLÖPFER, Armin**
**71522 Backnang (DE)**

(56) Entgegenhaltungen:
**DE-A- 4 307 907**    **US-A- 5 583 406**
**US-A- 5 684 383**    **US-A- 6 118 237**

EP 1 325 542 B1

**Beschreibung**

Die Erfindung betrifft ein Verfahren zur Regelung der Generatorspannung in einem Kraftfahrzeug gemäß dem Oberbegriff des Patentanspruchs 1, sowie ein Generatorsteuergerät gemäß dem Oberbegriff des Patentanspruchs 9 zur Durchführung des Verfahrens.

Bei den heute üblichen Fahrzeugen mit Verbrennungsmotor wird ein Generator von einem Verbrennungsmotor angetrieben und erzeugt elektrische Energie für das Bordnetz. Zum Puffern des Angebots an elektrischer Energie ist im Bordnetz eine Batterie vorhanden, die als Energiespeicher dient und nach teilweiser Entladung, mittels des Generators wieder geladen wird. Die Generatorspannung bestimmt Richtung und Größe des Ladungsflusses an der Batterie, also die Lade- und Entlade-Zyklen. Der Generator wird üblicherweise so geregelt, dass die erzeugte Spannung möglichst der Ladeschlussspannung der Batterie entspricht, so dass bei positiver Ladebilanz die Batterie immer vollständig geladen ist.

Aus der DE 43 07 907 A1 ist ein Verfahren zur Regelung der Generatorspannung in einem Kraftfahrzeug in Abhängigkeit von Betriebszuständen bekannt. Es wird vorgeschlagen, die Generatorspannung beim Beschleunigen zu erniedrigen, um den Fahrzeugmotor zu entlasten und beim Abbremsen die Generatorspannung zu erhöhen, damit der Generator zur Aufladung der Batterie durch Rekuperation von Bremsenergie mehr Leistung aufnehmen kann. Durch die an den Fahrzustand angepasste Sollwentavorgabe der Generatorspannung wird der Leistungsfluß zwischen Batterie, Generator und Verbraucher gesteuert. Ein ähnliches Verfahren ist auch aus der US 4,659,977 bekannt.

Schließlich offenbart die US 6,118,237 ein Hybrid-Antriebssystem mit Batteriemanagement. Dieses Batteriemanagement stellt eine Eingangs- und Ausgangsleistung einer Batterie wieder her, wenn die Batterietemperatur niedrig ist. Bei Erfassung einer niedrigen Batterietemperatur wird der Ladezustand der Batterie bestimmt und mit einem vorbestimmten Wert verglichen. Das Vergleichsergebnis wird verwendet, um zu bestimmen, ob die Batterie sich weiter entladen kann oder die Batterie geladen werden muss. Wenn der Ladezustand größer oder gleich dem vorbestimmten Wert ist, führt eine Steuereinrichtung ein verstärktes Entladen der Batterie durch, um einen Elektromotor eines Hybrid-Antriebssystems in der Leistungsbetriebsart anzutreiben. Diese verstärkte Entladung verursacht eine Erhöhung der Batterietemperatur, wodurch eine Wiederherstellung der Eingangs- und Ausgangsleistung der Batterie hervorgerufen wird. Wenn der Ladezustand hingegen kleiner oder gleich dem vorbestimmten Wert ist und die Batterietemperatur der Batterie kleiner oder gleich dem vorbestimmten Temperaturwert ist, erfolgt ein verstärktes Laden der Batterie durch Zufuhr elektrischer Energie vom Elektromotor.

Aufgabe der Erfindung ist es, in Kraftfahrzeugen mit Rekuperationsbetrieb die Lebensdauer der Batterie zu verlängern. Diese Aufgabe wird erfindungsgemäß durch die Merkmale des Anspruchs 1 gelöst.

Das erfindungsgemäße Verfahren erweitert die bekannten Verfahren zur Regelung eines Generators dahingehend, dass ein Betriebsmodus eingeführt wird, der die Folgen der Beanspruchung der Batterie teilweise rückgängig macht, welche aufgrund der Rekuperation entstehen. Bei der Rekuperation von Bremsenergie erfolgt eine verstärkte Beanspruchung der Kraftfahrzeugbatterie durch die häufigen Wechsel zwischen Entlade- und Ladevorgängen der Batterie. Um eine regelmäßige Regeneration der Batterie durchzuführen, schaltet ein Generatorsteuergerät regelmäßig von einem Rekuperationsbereitschaftsmodus in einen Erholungsmodus und wieder regelmäßig zurück in den Rekuperationsbereitschaftsmodus. Im Rekuperationsbereitschaftsmodus kann bedarfsweise durch die Vorgabe einer geeigneten Sollwertspannung ein Rekuperationsbetrieb eingeschaltet werden. Im Erholungsmodus wird die Sollwertspannung vom Generatorsteuergerät so vorgegeben, dass sich die Batterie von der erhöhten Beanspruchung aufgrund der Rekuperationsladewechsel regeneriert. Vorteil dieses Verfahrens ist, dass eine frühzeitige Alterung der Batterie verhindert wird.

In einer vorteilhaften Weiterbildung des Verfahrens wird als Kriterium zum Umschalten in den Erholungsmodus fortlaufend eine Rekuperationskenngröße bewertet, die ein charakteristisches Maß für die Batteriebeanspruchung durch den Rekuperationsbetrieb ist. Vorteil dieser Weiterbildung des Verfahrens ist, dass die Batterie bedarfsgerecht regeneriert wird, und somit eine verlängerte Zeit für die Rekuperation zur Verfügung steht, ohne dass die Lebensdauer der Batterie beeinträchtigt wird.

In einer vorteilhaften Ausgestaltung wird als Rekuperationskenngröße der Ladungsdurchsatz durch die Batterie genutzt, welcher ab einem bestimmten Startzeitpunkt erfolgt. Eine vorteilhafte Wahl des Startzeitpunkts ist beispielsweise der Zeitpunkt des letzten Umschaltens vom Erholungsmodus in den Rekuperationsbereitschaftsmodus.

In einer weiteren vorteilhaften Weiterbildung des Verfahrens zur Regelung der Generatorspannung wird vorgeschlagen, im Rekuperationsbereitschaftsmodus, beim Übergang von einem Ladevorgang der Batterie zu einer Ladungsentnahme aus der Batterie, ein Zwischenstadium einzuführen, in welchem eine kontrollierte Mischspeisung der Verbraucher aus der Batterie und dem Generator stattfindet. Vorteil dieser Erweiterung des Verfahrens ist es, dass die bei einem Wechsel von Lade- zu Entladevorgang in der Batterie auftretenden Leistungsverluste vermindert werden. In einer anderen vorteilhaften Weiterbildung wird im Rekuperationsbereitschaftsmodus die Batterie in einem Teilladungszustand gehalten. Im Teilladungszustand kann die Batterie besonders viel der Ladung aufnehmen, welche durch die Rekuperation erzeugt wird, man erhält also einen besonders hohen Anteil an rekuperativ gewonnener Energie. Vorteil dieses Verfahrens ist eine Verminderung des Kraftstoffverbrauchs, da die im Kraftfahrzeug benötigte elektrische Energie in größerem Umfang als bisher durch die Rekuperation erzeugt wird. Der ansonsten vorhandene Nachteil einer höheren Beanspruchung der Batterie wird durch das gesteuerte Umschalten in den Erholungsmodus aufgefangen.

Ein Ausführungsbeispiel der Erfindung ist nachstehend anhand der Zeichnung näher beschrieben. Es zeigen:

Fig. 1 eine Darstellung eines Rekuperationsbordnetzes mit einem erfindungsgemäßen Generatorsteuergerät.
Fig. 2 ein Ablaufdiagramm des erfindungsgemäßen Verfahrens.

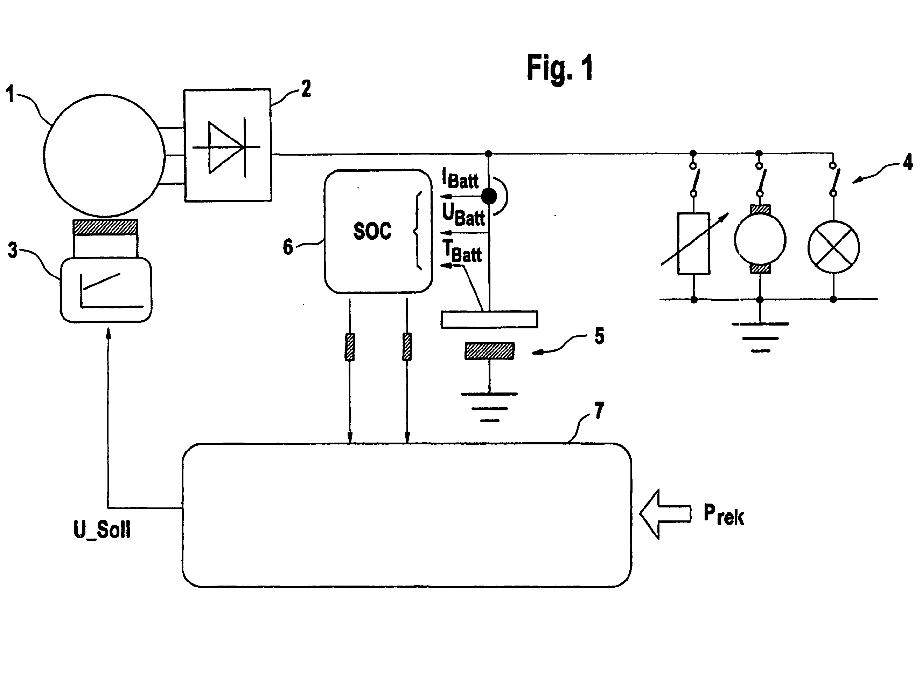

Die Fig.1 zeigt ein rekuperationsfähiges Kraftfahrzeugbordnetz mit einem Generator 1, der von der Brennkraftmaschine eines Kraftfahrzeugs oder von einer mit der Brennkraftmaschine koppelbaren Kraftquelle wie den Rädern des Kraftfahrzeugs angetrieben werden kann. Der Generator 1 mit dem Gleichrichter 2 weist einen Regler 3 auf, dem der Wert einer Sollwertspannung U_Soll vorgegeben wird. Die Ausgangsspannung am Gleichrichter 2 wird vom Regler 3, der Bestandteil des Generators 1 sein kann, auf diese Sollwertspannung U_Soll geregelt. Am Ausgang des Gleichrichters 2 wird bei einer ausreichend hohen Ausgangsspannung elektrischer Strom in das Bordnetz eingespeist. Der Ausgang des Gleichrichters 2 ist mit den elektrischen Verbrauchern 4 und der Batterie 5 elektrisch verbunden, so daß der bereitgestellte Strom zur direkten Versorgung der Verbraucher 4 dient und darüber hinaus die Batterie 5 auflädt, falls die eingespeiste Stromstärke hoch genug ist.

Die Kontrolleinheit 6 ermittelt, beispielsweise aus den beiden Klemmengrößen Batteriestrom $I_{Batt}$ und Batteriespannung $U_{Batt}$, den aktuellen Ladezustand SOC (State Of Charge) der Batterie 5. Als Eingangsgröße für die Ladezustandsbestimmung durch die Kontrolleinheit 6 können zusätzlich die Temperatur der Batterie 5 $T_{Batt}$, der Innenwiderstand der Batterie 5, die Umgebungstemperatur oder andere geeignete Parameter verwendet werden.

Das Bordnetz weist außerdem ein Generatorsteuergerät 7 auf, dessen Aufgabe es ist, die Ausgangsspannung am Gleichrichter 2 durch Vorgabe der Sollwertspannung U_Soll zu steuern. Die Höhe der Ausgangsspannung am Gleichrichter 2 ist entscheidend dafür, ob eine Rekuperation der kinetischen Energie in elektrische Energie stattfindet. Ist die Ausgangsspannung hoch genug, so wird die Batterie 5 aufgeladen, sinkt dagegen die Ausgangsspannung unter einen bestimmten Wert, so speist die Batterie Energie in das Bordnetz ein. Um die Lebensdauer der Batterie 5 möglichst wenig zu beeinträchtigen und gleichzeitig möglichst viel elektrische Energie aus der Rekuperation zu gewinnen werden dem Generatorsteuergerät 7 neben Batteriekenngrößen, wie beispielsweise dem Ladezustand SOC, noch weitere rekuperationsrelevante Parameter $P_{rek}$ zur Verfügung gestellt. Diese enthalten beispielsweise Informationen über die Schubabschaltung, die Fahrzeuggeschwindigkeit, die Außentemperatur, die Motortemperatur, die Bremspedalstellung, die Gaspedalstellung, den Momentanverbrauch, das Drehmoment an der Generatorwelle, die Kupplungsstellung, Informationen des Antiblockiersystems oder der elektronischen Stabilitätskontrolle usw., also Informationen über die Fahrdynamik, die Motorsteuerung, die Fahrwerksteuerung oder die Fahrerabsicht. Aus diesen Parametern $P_{rek}$ errechnet das Generatorsteuergerät 7 die Sollwertspannung U_Soll entsprechend eines vorgegebenen Regelungsverfahrens. Ein geeignetes Regelungsverfahren wird im Folgenden beschrieben.

Die Grundlage für die vom Generatorsteuergerät 7 vorgegebene Sollwertspannung U_Soll bildet ein sogenannter Basiswert der Generatorspannung $U_{Basis}$. Dieser Wert entspricht der Batterieruhespannung im Teilladungsbereich, der für den Rekuperationsbetrieb angestrebt wird. In Abhängigkeit vom tatsächlichen Ladezustand SOC, von der Temperatur der Batterie 5 $T_{Batt}$ und von der Gaspedalstellung wird dann diese Basisgeneratorspannung nach unten korrigiert. Damit reduziert der Generator 1 gegebenenfalls seinen Einspeiseanteil zu Lasten der Batterie 5 um die Brennkraftmaschine zu entlasten. Als eine einfache Formel zur Berechnung der Sollwertspannung U_Soll für die Regelung der Ausgangsspannung des Generators 1 dient beispielsweise:

$$U\_Soll = U_{Basis} + (SOC_{Soll} - SOC_{Ist})K_A + (T_{REF} - T_{Batt})K_T - (Gaspedalstellung[\%] \cdot K_B)$$

Hierbei ist $SOC_{Soll}$ der angestrebte Ladezustand, $SOC_{Ist}$ der tatsächliche Ladezustand, $T_{REF}$ eine Referenztemperatur und $T_{Batt}$ die gemessene Batterietemperatur, $K_A$, $K_T$, und $K_B$ sind Korrekturfaktoren für die Gewichtung des Ladezustands SOC, der Temperatur und der Gaspedalstellung.

Die Funktionen der Kontrolleinheit 6 und des Generatorsteuergeräts 7 entsprechend vorhergehender Beschreibung können auch in einer einzigen Einheit Generatorsteuergerät mit Batteriekontrolleinheit integriert sein.

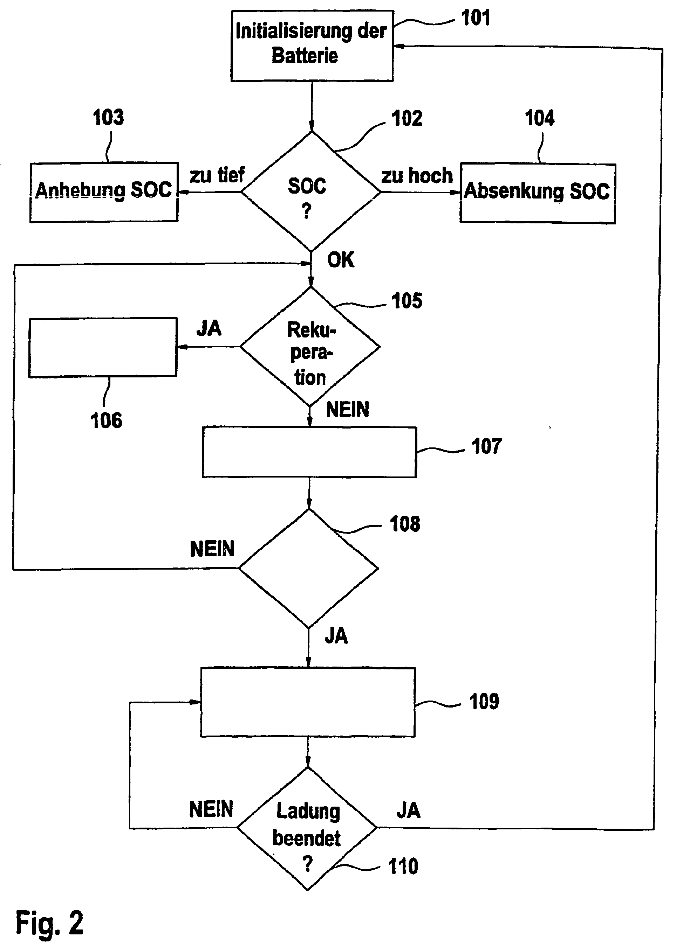

Die Fig. 2 zeigt ein vorteilhaftes Ausführungsbeispiel eines Ablaufdiagramms des erfindungsgemäßen Verfahrens zur Regelung eines Generators 1. Zu Beginn des Verfahrens wird in Schritt 101 eine Initialisierung der Batterie 5 durchgeführt. Hierbei werden die Werte der Batteriekenngrößen ermittelt und aus diesen Werten wird der Ladezustand SOC der Batterie 5 errechnet. Anschließend wird in der Verzweigung 102 geprüft ob sich der Ladezustand SOC der Batterie 5 in einem vorgegebenen Ladezustandsbereich befindet. Dieser Ladezustandsbereich ist so festgelegt, dass die Ladungsakzeptanz der Batterie 5 möglichst hoch ist, der Ladungszustand der Batterie ebenfalls möglichst hoch ist und der Bereich möglichst groß. Da sich diese Anforderungen entgegenstehen, kann die Festlegung des Ladezustandsbereichs immer nur eine Kompromißlösung sein. Deshalb wird in einer vorteilhaften Ausführung der Ladezustandsbereich während des Fahrzeugbetriebs angepasst, und zwar in Abhängigkeit von mindestens einem der Parameter Alterungszustand der Batterie, Außentemperatur und zurückgelegte Strecke seit dem letzten Startvorgang. In einer vorteilhaften Ausführung der Erfindung liegt der vorgegebene Ladezustandsbereich im Teilladungsbereich, beispielsweise zwischen 60% und 80% einer Vollladung, um eine möglichst hohe Ladungsakzeptanz der Batterie 5 zu erhalten. Das Verfahren kann aber auch in einem Ladezustandsbereich bis 100% Aufladung, also bis zur Volladung der Batterie 5 durchgeführt werden.

Liegt der Ladezustand der Batterie 5 unterhalb des vorgegebenen Ladezustandsbereichs, so wird in Schritt 103 der Ladezustand angehoben, bis er innerhalb des vorgegebenen Bereichs ist. Dies geschieht durch die Regelung der Generatorspannung auf ein Ladeniveau, z.B. auf die Ladeschlußspannung. Liegt der Ladezustand SOC oberhalb des vorgegeben Ladezustandsbereichs, so wird in Schritt 104 auf ein Zuschalten des Generators 1 so lange verzichtet, bis sich der Ladezustand SOC der Batterie 5 soweit abgesenkt hat, dass er im vorgegeben Bereich liegt.

Ergibt die Abfrage 102, dass der Ladezustand SOC der Batterie 5 im vorgegebenen Ladezustandsbereich liegt, so wird mit Schritt 105 in den Rekuperationsbereitschaftsmodus geschaltet. In diesem Modus wird der Rekuperationsbetrieb 106, in welchem vom Generator 1 kinetische in elektrische Energie umgewandelt wird, durch die Überwachung von Rekuperationsbedingungen gesteuert.

Mögliche Rekuperationsbedingungen sind die Schubabschaltung, die Bremspedalbetätigung, der Kraftschluß zwischen Wellen und vorgegebene Wertebereiche der Fahrgeschwindigkeit und der Motordrehzahl. Bei Automatikgetrieben ist eine besondere Rückschaltstrategie für den Rekuperationsbetrieb vorteilhaft. Diese Bedingungen dienen dazu, um spezielle Fälle wie das Stehen des Fahrzeugs mit laufendem Motor und gleichzeitigem Betätigen der Betriebsbremse, in denen keine Rekuperation stattfinden soll, auszuschließen.

Die Sollwertspannung wird in Schritt 106 vom Generatorsteuergerät 7 so vorgegeben, dass Rekuperation stattfindet, solange die Rekuperationsbedingungen erfüllt sind. Die Rekuperationsbedingungen werden fortlaufend (Schritt 105) vom Generatorsteuergerät 7 überprüft und es wird wieder in den Rekuperationsbereitschaftsmodus zurückgeschaltet, falls diese Bedingungen nicht mehr erfüllt sind.

Findet keine Rekuperation statt, so wird in Schritt 107 ein Teil der gespeicherten Energie von der Batterie 5 an die Verbraucher 4 abgegeben. Zur Vermeidung von erhöhten Leistungsverlusten aufgrund elektrochemischer Reaktionen in der Batterie 5, wird bei einem Wechsel von der Rekuperation 106 zu einer Ladungsentnahme aus der Batterie 107 die Energie in einem Zwischenstadium möglichst schonend entnommen, das heißt es gibt eine kurzzeitige Mischspeisung der Verbraucher 4 durch den Generator 1 und die Batterie 5. Durch diese Mischspeisung wird ein kontinuierlicher Übergang zwischen Ladevorgang und Leistungsentnahme aus der Batterie realisiert. Anstelle des kontinuierlichen Übergangs können auch eine oder mehrere diskrete Stufen der Leistungsverteilung zwischen Generator 1 und Batterie 5 vorgesehen werden. Es ist vorteilhaft, während der Mischspeisung die Leistungsverteilung und deren Dauer in Abhängigkeit von Batteriekenngrößen zu regeln. Geeignete Batteriekenngrößen sind beispielsweise die Dauer des letzten Ladevorgangs, die Batterietemperatur, der Leistungsbedarf aus der Batterie 5, der Ladezustand SOC und die Kapazität der Batterie 5.

Ebenfalls in Schritt 105 wird in einer vorteilhaften Ausführung die Rekuperation so geregelt, dass sich die Batterie immer im vorgegebenen Teilladungszustand, also in dem Ladezustandsbereich mit hoher Ladungsakzeptanz befindet.

In der regelmäßig durchgeführten Abfrage 108 werden eine oder mehrere charakteristische Größen für die Batteriebeanspruchung bewertet und bei Erfüllung vorgegebener Bedingungen wird vom Rekuperationsmodus in den Erholungsmodus umgeschaltet. Mögliche charakteristische Größen für die Batteriebeanspruchung sind der Ladungsdurchsatz, die Zeit, die Batterietemperatur, die Differenz zwischen Batterietemperatur und Außentemperatur, der Gradient der Batterietemperatur, die Anzahl der Bremsvorgänge oder die Anzahl mal der Länge der Bremsvorgänge. In einer vorteilhaften Ausführung besteht die Bedingung zum Umschalten in den Erholungsmodus darin, dass mindestens eine der abgefragten charakteristischen Größen einen bestimmten Wert überschreitet. Die Größen werden ab einem bestimmten Startzeitpunkt ermittelt, beispielsweise ab dem letzten Umschalten in den Rekuperationsbereitschaftsmodus, und für die Abfrage in Schritt 108 bereitgestellt. Die Abfrage 108 zum Umschalten in den Erholungsmodus kann kontinuierlich oder in vorgegebenen Abständen durchgeführt werden.

Nach dem Umschalten in den Erholungsmodus wird in Schritt 109 die Sollwertspannung so vorgegeben, dass sich die Batterie 5 regeneriert, beispielsweise indem sie für einen bestimmten Zeitraum im Vollladungszustand gehalten wird. Die Höhe der Sollwertspannung wird abhängig von den Batteriekenngrößen und der Außentemperatur geregelt, es kann aber auch eine feste Sollwertspannung, beispielsweise die Ladeschlußspannung vorgegeben werden. Im Schritt 109 werden außerdem die charakteristischen Größen für die Batteriebeanspruchung auf Null gesetzt. In der Abfrage 110 wird überprüft, ob eine ausreichende Batterieregeneration stattgefunden hat und bei einer ausreichend regenerierten Batterie 5 wird diese in Schritt 101 neu initialisiert. In einer einfacheren Ausführung kann ein fester Zeitraum zur Regeneration der Batterie 5 vorgegeben werden, nach welchem der Erholungsmodus beendet und mit der erneuten Initialisierung in Schritt 101 das Verfahren fortgeführt wird.

In einer anderen Ausführungsform wird die Regeneration der Batterie 5 dadurch erreicht, dass die Batterie 5 bis auf einen ersten Ladezustand SOC entladen und anschließend bis auf einen zweiten Ladezustand SOC aufgeladen wird, wobei der zweite Ladezustand SOC insbesondere eine Vollladung sein kann. Dieses kontrollierte Entladen und Aufladen der Batterie 5 wird einmal oder mehrmals hintereinander durchgeführt. Da bei dieser Ausführung des Verfahrens die Batterie 5 stark entladen wird, ist eine Batterieregeneration auf diese Weise nur in einem Fahrzeug mit mehr als einer Batterie 5 durchführbar, um eine dauerhafte elektrische Energieversorgung und ständige Startfähigkeit gewährleisten zu können.

**Patentansprüche**

1. Verfahren zur Regelung eines Generators in einem Kraftfahrzeug,

   - wobei der Generator ein Bordnetz mit Verbrauchern und mindestens einer Batterie speist,
   - wobei ein Regler die Generatorausgangsspannung auf den Wert einer Sollwertspannung einregelt,
   - wobei in einem Rekuperationsbereitschaftsmodus die Sollwertspannung in Abhängigkeit der Fahrzustandsgrößen so vorgegeben wird, dass beim Abbremsen oder im Schubbetrieb des Fahrzeugs elektrische Energie in das Bordnetz eingespeist wird,

   **dadurch gekennzeichnet,**
   **dass** in Abhängigkeit von vorgegebenen Umschaltbedingungen zwischen dem Rekuperationsbereitschaftsmodus und einem Erholungsmodus umgeschaltet wird, wobei im Erholungsmodus die Sollwertspannung (U_Soll) so vorgegeben wird, dass sich die Batterie (5) regeneriert.

2. Verfahren nach Anspruch 1, **dadurch gekennzeichnet,**
   **dass** im Erholungsmodus die Sollwertspannung (U_Soll) unabhängig von den Fahrzustandsgrößen auf die Ladeschlussspannung gesetzt wird.

3. Verfahren nach Anspruch 1, **dadurch gekennzeichnet,**
   **dass** im Erholungsmodus die Sollwertspannung (U_Soll) so geregelt wird, dass die Batterie (5) mindestens einmal bis auf einen ersten vorgegebenen Ladezustand SOC entladen und anschließend bis auf einen zweiten vorgegebenen Ladezustand SOC aufgeladen wird.

4. Verfahren nach den Ansprüchen 1 bis 3, **dadurch gekennzeichnet,**
   **dass** zum Umschalten vom Rekuperationsbereitschaftsmodus in den Erholungsmodus, als Umschaltbedingung eine Rekuperationskenngröße verwendet wird, welche für die Batteriebeanspruchung aufgrund von Rekuperationsladungswechseln charakteristisch ist.

5. Verfahren nach Anspruch 4, **dadurch gekennzeichnet,**
   **dass** die Rekuperationskenngröße, die als Umschaltbedingung verwendet wird, der Ladungsdurchsatz durch die Batterie (5) ist, der ab einem bestimmten Startzeitpunkt erfasst wird.

6. Verfahren nach Anspruch 5, **dadurch gekennzeichnet,**
   **dass** der Startzeitpunkt ab dem der erfasste Ladungsdurchsatz durch die Batterie 5 betrachtet wird, der Zeitpunkt des letzten Umschaltens vom Erholungsmodus in den Rekuperationsbereitschaftsmodus ist.

7. Verfahren nach einem der Ansprüche 1 bis 6, **dadurch gekennzeichnet,**
   **dass** im Rekuperationsbereitschaftsmodus und in Phasen ohne Rekuperationsbetrieb die Batterie (5) auf einen vorbestimmten Teilladungszustand eingeregelt wird.

8. Verfahren nach einem der Ansprüche 1 bis 7, **dadurch gekennzeichnet,**
   **dass** im Rekuperationsbereitschaftsmodus bei einem Wechsel von einem Ladevorgang der Batterie 5 zu einer Ladungsentnahme aus der Batterie 5 ein Zwischenstadium vorgesehen ist, in dem eine Mischspeisung der Verbraucher aus Batterie 5 und Generator 1 stattfindet.

9. Generatorsteuergerät 7 zur Regelung der Generatorspannung,

in einem Kraftfahrzeug mit einem Generator, der von einer Brennkraftmaschine angetrieben wird und mit einem Bordnetz mit

- mindestens einer Batterie und
- einem Regler, der die Generatorausgangsspannung auf den Wert einer Sollwertspannung einregelt,

wobei das Generatorsteuergerät

- einen Dateneingang für Fahrzustandsgrößen und Batteriekenngrößen aufweist und
- einen Datenausgang für die Sollwertspannung aufweist, und wobei durch das Generatorsteuergerät die Sollwertspannung so vorgebbar ist, dass im Rekuperationsbereitschaftsmodus in Abhängigkeit der Fahrzustandsgrößen elektrische Energie in das Bordnetz eingespeist wird,

**dadurch gekennzeichnet,**
**dass** das Generatorsteuergerät 7 eine Auswerteeinheit aufweist, zur Ermittlung des Ladezustands SOC der Batterie und zur Auswertung von Fahrzustandsgrößen des Kraftfahrzeugs, und dass das Generatorsteuergerät 7 eine Umschaltstufe aufweist, zur Umschaltung zwischen dem Rekuperationsbereitschaftsmodus und dem Erholungsmodus.


**Revendications**

1.  Procédé pour réguler un alternateur dans un véhicule automobile,

    - l'alternateur alimentant un réseau de bord avec des appareillages et au moins une batterie,
    - un régulateur régulant la tension de sortie de l'alternateur à la valeur d'une tension de consigne,
    - la tension de consigne étant prédéfinie dans un mode prêt à la récupération en fonction des grandeurs d'état de déplacement de telle sorte qu'en cas de freinage ou en mode poussée du véhicule, de l'énergie électrique soit injectée dans le réseau de bord,

    **caractérisé en ce**
    **qu'**il se produise un basculement entre le mode prêt à la récupération et un mode de régénération en fonction de conditions de basculement prédéfinies, la tension de consigne (U_Soll) en mode de régénération étant prédéfinie de telle sorte que la batterie (5) se régénère.

2.  Procédé selon la revendication 1, **caractérisé en ce qu'**en mode de régénération, la tension de consigne (U_Soll) est fixée à la tension de fin de charge indépendamment des grandeurs d'état de déplacement.

3.  Procédé selon la revendication 1, **caractérisé en ce qu'**en mode de régénération, la tension de consigne (U_Soll) est régulée de telle sorte que la batterie (5) est déchargée au moins une fois jusqu'à un premier état de charge prédéfini SOC et ensuite chargée jusqu'à un deuxième état de charge prédéfini SOC.

4.  Procédé selon les revendications 1 à 3, **caractérisé en ce que** pour le basculement du mode prêt à la récupération en mode de régénération, la condition de basculement employée est une grandeur caractéristique de récupération qui est caractéristique de la sollicitation de la batterie en raison d'un changement de charge de récupération.

5.  Procédé selon la revendication 4, **caractérisé en ce que** la grandeur caractéristique de récupération qui est utilisée comme condition de basculement est le débit de charge à travers la batterie (5), lequel est détecté à partir d'un moment de départ donné.

6.  Procédé selon la revendication 5, **caractérisé en ce que** le moment de départ à partir duquel le débit de charge à travers la batterie 5 est pris en compte est le moment du dernier basculement du mode de régénération en mode prêt à la récupération.

7.  Procédé selon l'une des revendications 1 à 6, **caractérisé en ce qu'**en mode prêt à la récupération et pendant les phases sans fonctionnement en récupération, la batterie (5) est régulée à un état de charge partielle prédéfini.

8.  Procédé selon l'une des revendications 1 à 7, **caractérisé en ce qu'**en mode prêt à la récupération, lors d'un changement d'une opération de charge de la batterie 5 à un prélèvement de charge de la batterie 5, il est prévu un état intermédiaire dans lequel se produit une alimentation mixte des appareillages à partir de la batterie 5 et de l'alternateur 1.

9. Appareil de commande d'alternateur 7 pour réguler la tension de l'alternateur dans un véhicule automobile muni d'un alternateur, lequel est entraîné par un moteur à combustion interne et comprenant un réseau de bord avec

  - au moins une batterie et
  - un régulateur qui régule la tension de sortie de l'alternateur à la valeur d'une tension de consigne,

l'appareil de commande d'alternateur

  - présentant une entrée de données pour les grandeurs d'état de déplacement et les grandeurs caractéristiques de la batterie et
  - présentant une sortie de données pour la tension de consigne,

et la tension de consigne pouvant être prédéfinie par l'appareil de commande d'alternateur de telle sorte qu'en mode prêt à la récupération, de l'énergie électrique soit injectée dans le réseau de bord en fonction des grandeurs d'état de déplacement,
**caractérisé en ce**
**que** l'appareil de commande d'alternateur 7 présente une unité d'évaluation pour déterminer l'état de charge SOC de la batterie et pour évaluer les grandeurs d'état de déplacement du véhicule automobile et que l'appareil de commande d'alternateur 7 présente un étage de basculement pour basculer entre le mode prêt à la récupération et le mode de régénération.

## Claims

1. Method for regulating a generator in a motor vehicle,

  - with the generator feeding a vehicle power supply system having loads and having at least one battery,
  - with a regulator regulating the generator output voltage at the value of a nominal value voltage,
  - with the nominal value voltage in a recuperation readiness mode being preset as a function of the driving state variables such that, during braking or when the vehicle is overrunning, electrical power is fed into the vehicle power supply system,

**characterized**
**in that** switching takes place between the recuperation readiness mode and a recovery mode as a function of predetermined switching conditions, with the nominal value voltage (U_nom) in the recovery mode being preset such that the battery (5) is regenerated.

2. Method according to Claim 1, **characterized**
**in that**, in the recovery mode, the nominal value voltage (U_nom) is set to the final charge voltage independently of the driving state variables.

3. Method according to Claim 1, **characterized**
**in that**, in the recovery mode, the nominal value voltage (u_nom) is regulated such that the battery (5) is discharged at least once down to a first predetermined state of charge SOC, and is then charged to a second predetermined state of charge SOC.

4. Method according to Claims 1 to 3, **characterized**
**in that** a recuperation characteristic variable, which is characteristic of the battery stress resulting from recuperation charging changes is used as a switching condition for switching from the recuperation readiness mode to the recovery mode.

5. Method according to Claim 4, **characterized**
**in that** the recuperation characteristic variable which is used as a switching condition is the charge throughput through the battery (5) which is detected after a specific start time.

6. Method according to Claim 5, **characterized**
**in that** the start time from which the detected charge throughput through the battery 5 is considered is the time when switching last took place from the recovery mode to the recuperation readiness mode.

7. Method according to one of Claims 1 to 6, **characterized**
**in that** the battery (5) is regulated at a predetermined partial state of charge in the recuperation readiness mode and in phases without recuperation operation.

8. Method according to one of Claims 1 to 7, **characterized**
**in that**, in the recuperation readiness mode, an intermediate stage, in which the loads are supplied in a mixed manner from the battery 5 and from the generator 1, is provided during a change from a charging process for the battery 5 to charge being drawn from the battery 5.

9. Generator controller 7 for regulating the generator voltage in a motor vehicle having a generator which is driven by an internal combustion engine and having a vehicle power supply system, having

- at least one battery and
- a regulator which regulates the generator output voltage at the value of a nominal value voltage,

with the generator controller

- having a data input for driving state variables and battery characteristic variables, and
- having a data output for the nominal value voltage,

and in which case the nominal value voltage can be preset by the generator controller such that electrical power is fed into the vehicle power supply system as a function of the driving state variables in the recuperation readiness mode,
**characterized**
**in that** the generator controller 7 has an evaluation unit for determining the state of charge SOC of the battery and for evaluating driving state variables of the motor vehicle, and in that the generator controller 7 has a switching step for switching between the recuperation readiness mode and the recovery mode.

Fig. 1

Initialisierung der
Batterie —— 101

103 ⌐ 102 104 ⌐

| Anhebung SOC | ← zu tief | SOC ? | zu hoch → | Absenkung SOC |

OK

105 ⌐

JA ← Rekuperation

106

NEIN

107

108

NEIN

JA

109

NEIN ← Ladung
beendet
? → JA

110

# Fig. 2